# EUROPEAN PATENT SPECIFICATION

(11) **EP 2 394 811 B1**
(45) Date of publication and mention of the grant of the patent: **29.08.2012**
(21) Application number: 10165201.4
(22) Date of filing: 08.06.2010
(51) Int. Cl.: B32B 3/12, B32B 3/28, B32B 5/26, A41D 31/00

(54) **A performance textile having gas permeable and protective function**
Funktionstextil mit gasdurchlässiger und schützender Funktion
Textile haute performance doté d'une fonction de protection et perméable aux gaz

(43) Date of publication of application: 14.12.2011
(73) Proprietor: Jade Long John Enterprise Co., Ltd, Changhua County (TW)
(72) Inventor: Wen, Wen-Tsao, Changhua County (TW)
(74) Representative: 2K Patentanwälte Blasberg Kewitz & Reichel

(56) References cited:
- WO-A1-97/33493
- WO-A1-99/49236
- WO-A2-03/022085

## Description

The present invention relates to a performance textile and particularly to a performance textile equipped with enhanced gas permeability and protective function.

### BACKGROUND OF THE INVENTION

Performance textile generally refer to textiles equipped with specific functions such as water-tightness, gas permeability, ultraviolet light-resistance, impact resistance, abrasion-resistance, low weight or the like. It is widely used in recreational or specialty applications. For those used in active sports, mountaineering or police, military and fire fighters in duty, wearing garments or protective outfits made from performance fabrics capable of absorbing impact usually is needed. These fabrics now being developed mainly are made from impact-absorbing material or equipped with a cushion structure to

For instance, U.S. patent 4,292,263 discloses a method of producing a foamed polyurethane body-protecting pad which includes a terry knit tube and a foam pad attached to an outer surface thereof. The foam pad is made from polyurethane (PU). U.S. patent 6,192,519 discloses an athletic sports pad which includes a tubular member and a high friction material located on the tubular member. The tubular member includes a padded section and an un-padded portion. The padded section has a pad made from foamed polymers to provide protective function.

U.S. patent 6,122,768 discloses a joint protector for use in active sports. It includes a cushion pad, a semi-rigid cap and a flexible cover which are arranged from inside to outside. The cushion pad is made from foamed polyethylene (PE) or polyurethane (PU). The cap is made from polyvinyl chloride (PVC), polypropylene (PP) or polyethylene (PE) that is formed at a selected thickness by injection molding process. U.S. patent gazette No. 2009/0255037 discloses a protective covering which mainly includes a soft inner layer and a hard outer layer. The soft inner layer and hard outer layer are interposed by an intermediate layer. The soft inner layer and intermediate layer are made from foamed ethylene-vinyl acetate (EVA). U.S. patent 5,416,924 discloses a flexible protective padding which mainly includes a metal shield, foamed polymer and Neoprene rubber.

All the aforesaid performance fabrics use foamed polymers or elastic rubber and are formed at a selected thickness so as to provide impact resistant mechanical characteristics for use on protective pads. While they provide protective function for human body, they do not have desired gas permeability. When in use, people's skin feels uncomfortable due to sweltering. Perspiration generated during sport activities is difficult to be expellled from clothes or protective outfits. Hence they do not provide comfortable wearing for users.

WO 03/022085 A2 discloses a performance textile according to the preamble of claim 1. The textile comprises a woven upper layer and a woven lower layer between which is sandwiched a spacer layer comprising a plurality of threads, which are filled with a dilatent compound. Both the laminate and the soft dilatent compound are compressible on impact whereby the soft dilatent material becomes rigid to absorb the energy of the impact. The laminate carrier assists the dilatent compound to return to its original configuration after the impact. The gas contained in the bulged regions of the flexible fabric, however, does not pass through the flexible fabric when the structure is impacted.

WO 97/33493 discloses a pad comprising an outermost layer of high density polymer foam attached to an inner layer of low density polymer foam. The score lines may partially extend through the thickness of the pad so as to provide substantial flexibility and conformability to the area of the human body covered by the pad without significantly affecting resistance to impact forces. The pad has a high degree of open area through its thickness for breathability while maintaining significant impact resistance. However, the pad also comprises a dilatent material.

WO 99/49236 discloses an impact absorbing structure made from a bag made of textile material filled with a fluid and resilient capsules, whereby some of the fluid is forced through the textile layer when the structure is impacted. However, the fluid does not flow outside of the structure.

### SUMMARY OF THE INVENTION

It is an object of the present invention to further improve the performance textile according to the preamble of claim 1 to provide an improved heat exchange in the structure when the user is in action.

The above and related problems are solved by a performance textile according to claim 1. Further advantageous embodiments are the subject-matter of the dependent claims.

According to the present invention the problem of conventional protective performance fabrics is identified in that such fabrics have poor gas permeability and thus result in uncomfortable and sweltering feeling of users when exercising.

To achieve the foregoing object the present invention provides a performance textile having gas permeable and protective functions that includes a flexible fabric and a gas permeable fabric. The flexible fabric includes a joining surface and can receive a force in parallel with the joining surface. The flexible fabric is in a stretched condition when being subjected to the force and in an un-stretched condition when the force is absent. The gas permeable fabric is arranged on the flexible fabric and includes a plurality of contact regions and a plurality of bulged regions. The contact regions connect to the joining surfaces. The bulged regions are adjacent to the contact regions and form a chamber with the joining surface to contain gas. A relative displacement is generated between the contact regions when the flexible fabric changes from the un-stretched -condition to the stretched conditions. According to the present invention the bulged regions move towards the joining surface to conform to the relative displacement to form a volume change of the chamber such that a pressure difference is created to force the gas to pass through the flexible fabric.

In one embodiment of the present invention the flexible fabric also includes a bottom layer, a top layer and a support layer interposed between the bottom layer and top layer. The top layer is connected to the gas permeable fabric. The support layer includes a plurality of support sections with two ends connecting respectively to the bottom layer and top layer.

By means of the structure set forth above the performance textile of the present invention provides many benefits over the conventional performance textiles, notably:
1. The structure of the present invention can transfer the force to the flexible fabric during actions of users to lower the bulged regions and accordingly increase the pressure inside the chamber, thus forces the gas to flow to the user's skin and improves gas permeability.
2. Another pressure difference also is formed at a space between the flexible fabric and user's skin to expel vapors of sweat excreted from user's skin through the textile, thus user's skin can feel cooler and more comfortable.
3. In addition to ventilation effect by forcing the gas flows, the bulged regions also provide protective function for user's body to absorb external impact and reduce injury that might otherwise occur.
4. The support sections arranged inside the flexible fabric can enhance cushion of external impact and also provide ability to stretch longitudinally during user movements. Incorporating with the transverse extensibility provided by different weaving directions of the bottom and top layers the flexible fabric can provide excellent ability to stretch in three-dimensional.

The foregoing, as well as additional objects, features and advantages of the present invention will be more readily apparent from the following detailed description, which proceeds with reference to the accompanying drawings.

### BRIEF DESCRIPTION OF THE DRAWINGS

FIG. 1 is an exploded view of an embodiment of the performance textile having gas permeable and protective functions of the present invention.
FIG. 2 is a sectional view of the embodiment of the textile of the present invention with the flexible fabric in an un-stretched condition.
FIG. 3 is a sectional view of the embodiment of the textile of the present invention with the flexible fabric in a stretched condition.
FIG. 4 is a sectional view of another embodiment of the textile of the present invention.

### DETAILED DESCRIPTION OF THE PREFERRED EMBODIMENTS

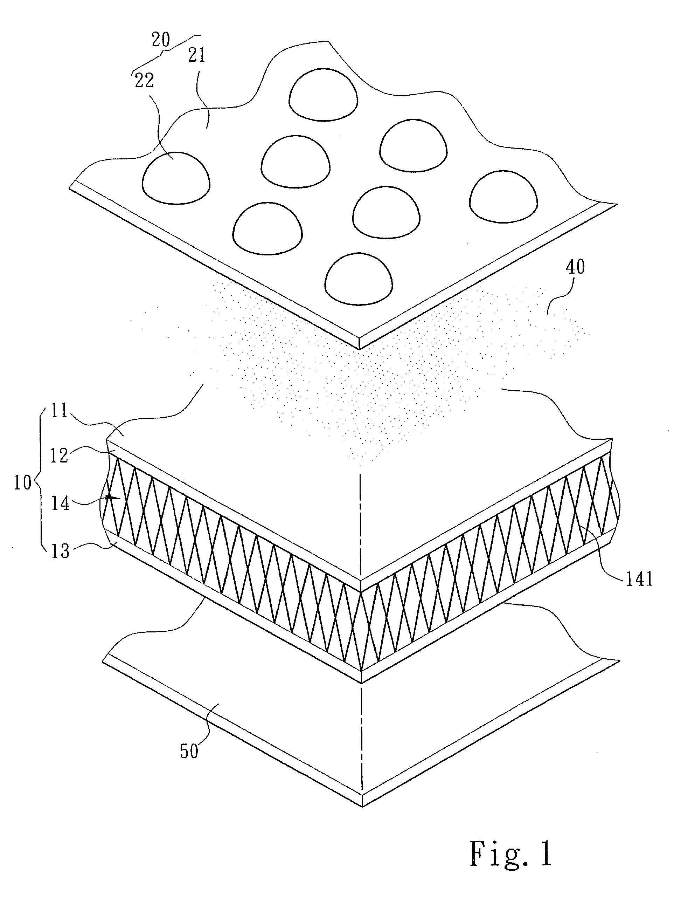

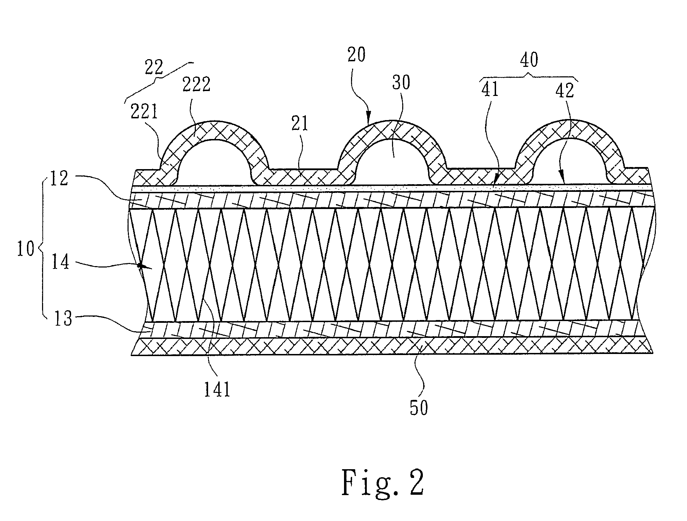

Please refer to FIGS. 1 and 2 respectively for an embodiment of the performance textile having gas permeable and protective functions of the present invention, and the embodiment of the textile of the present invention with the flexible fabric in an un-stretched condition. The performance textile mainly includes a flexible fabric 10 and a gas permeable fabric 20. The flexible fabric 10 has a joining surface 11. The gas permeable fabric 20 is arranged on the flexible fabric 10, and includes a plurality of contact regions 21 and a plurality of bulged regions 22. The contact regions 21 connect to the joining surfaces 11. The bulged regions 22 are adjacent to the contact regions 21 and form a chamber 30 with the joining surface 11 to contain gas penetrated from the bulged regions 22 of the gas permeable fabric 20. Each of the bulged regions 22 includes a peripheral portion 221 and an upper portion 222. The peripheral portion 221 is adjacent to the contact regions 21. The upper portion 222 is extended from the peripheral portion 221 and has an outer diameter smaller than the peripheral portion 221 such that each bulged region 22 is formed in a semispherical shape. In this embodiment the bulged regions 22 are arranged as a regular pattern in two dimensions. But this is not the limitation, an irregular pattern may also be formed according to the requirement of design.

In this embodiment, the flexible fabric 10 is bonded to the gas permeable fabric 20 through an adhesive layer 40. The adhesive layer 40 may be a moisture-cure gel, preferably polyurethane (PU) or polymethylmethacrylate (PMMA) printing on the joining surface 11 by roller printing, knife printing or spreading methods to bind with the gas permeable fabric 20. The moisture cure gel is cured to form the adhesive layer 40 which has a plurality of bonding regions 41 and a plurality of non-bonding regions 42 complementary to the bonding regions 41. The bonding regions 41 allow the joining surface 11 to form a tight bonding with the contact region 21. Aside from forming chemical binding through the adhesive layer 40, the flexible fabric 10 and the gas permeable fabric 20 may also be bonded together mechanically by various weaving or knitting processes.

Referring to FIG. 2, the flexible fabric 10 includes a top layer 12, a bottom layer 13 and a support layer 14 interposed between the top layer 12 and bottom layer 13. The top layer 12 is connected to the gas permeable fabric 20 through the adhesive layer 40. The support layer 14 includes a plurality of support sections 141 with two ends connecting respectively to the top layer 12 and bottom layer 13. Besides, an angle is formed between the support sections 141 in a range between 10° to 90°. In addition, a pliable layer 50 may be attached on a surface of the flexible fabric 10 opposite to the gas permeable fabric 20. The pliable layer 50 may be selected from a fabric with a soft touching feel with human's skin, yarns of the fabric may use cotton or a blend of cotton and synthetic fiber. Binding of the pliable layer 50 with the gas permeable fabric 20 may also be accomplished by chemical or mechanical means same as binding of the flexible fabric 10 to the gas permeable fabric 20.

The bottom layer 13, top layer 12 and gas permeable fabric 20 can be made by weaving, knitting or crocheting. In this embodiment, the bottom layer 13 and top layer 12 are preferably manufactured by a circular knitting machine in warp and weft directions respectively. Thus the bottom layer 13 and top layer 12 can have similar ability to stretch in directions on horizontal. The gas permeable fabric 20 is preferably made by a warp knitting machine to provide improved abrasion resistance. The bottom layer 13, top layer 12 and gas permeable fabric may be formed by elastic yarns, preferably Spandex fibers, nylon 6 fibers, nylon 6-6 fibers, polyethylene terephthalate (PET) fibers, polyurethane (PU) fibers, polyethylene (PE) fibers, polypropylene (PP) fibers, or combinations thereof.

The support sections 141 are made of monofilament fibers, such as polyester fibers, polypropylene (PP) fibers, polyamide fibers, polyethylene (PE) fibers, polyacrylonitrile (PAN) fibers, polyethylene terephthalate (PET) fibers or combinations thereof. The support sections 141 are preferably connected to the bottom layer 13 and top layer 12 by tuck knitting.

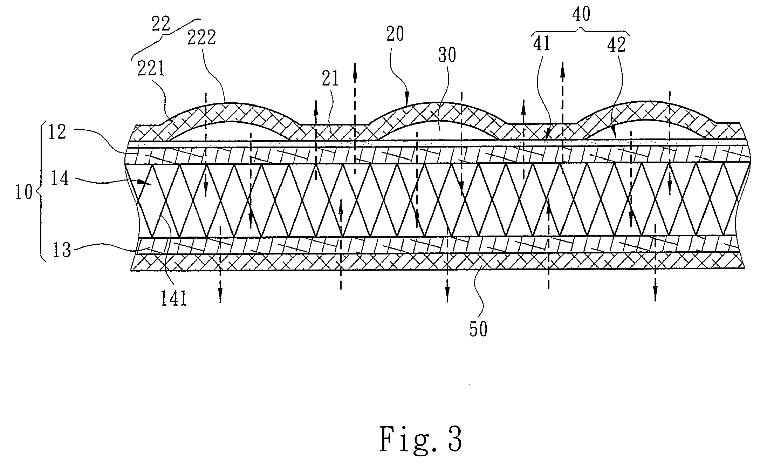

In practice, when a user is in still or a state with small action, the flexible fabric 10 is in an un-stretched condition as shown in FIG. 2. The chamber 30 remains the original profile. Referring to FIG. 3, when the user is in action and the flexible fabric 10 receives a force in parallel with the joining surface 11, such as at the bending spot of joints or user's body in a stretching condition, the flexible fabric 10 is extended transversely in a stretched condition. Because the flexible fabric 10 and the gas permeable fabric 20 are bonded together, the gas permeable fabric 20 also is stretched transversely, and a relative displacement is generated between the contact regions 21 when the flexible fabric 10 changes from the un-stretched condition to stretched condition. The bulged regions 22 also move towards the joining surface 11, hence the chamber 30 is lowered to form a volume change.

Referring to FIG. 3, the volume change of the chamber 30 generates a pressure difference inside that the internal pressure thereof, namely the internal pressure of the chamber 30 is increased to force the gas to flow downwards, and part of the flexible fabric 10 corresponding to the bulged regions 22 form a passage that provides the gas to flow towards user's skin through the pliable layer 50 as shown by downward arrows. While the gas passes through the pliable layer 50 to a gap between the pliable layer 50 and user's skin, another gas pressure is formed in the gap to make vapors coming from sweat produced by user's skin to expel through the contact regions 21. That is, part of the flexible fabric 10 corresponding to the contact regions 21 form a passage to allow the vapors to be expelled from the user's skin as shown by the upward arrows in FIG. 3. Therefore a gas circulation is formed between the gas from exterior and the vapors from the sweat through the passages to perform heat exchange between the performance textile and user's skin when the user is in action.

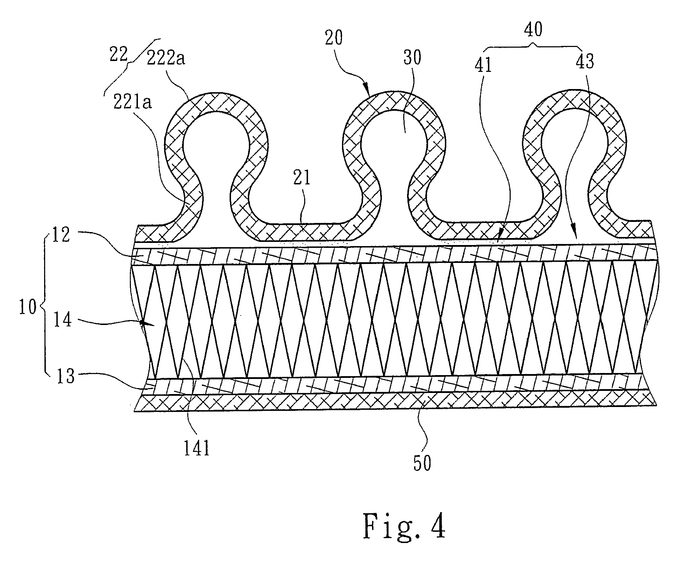

Refer to FIG. 4 for another embodiment of the performance textile of the present invention. The flexible fabric 20 is manufactured in another fashion with the upper portions 222a of the bulged regions 22 formed at a diameter larger than the peripheral portion 221 a so that each bulged region 22 is formed in a water drop shape as shown in Fig. 4. To reduce the impediment of the gas flowing to user's skin the bonding region 41 of the adhesive layer 40 may be selectively formed on the joining surface 11. As shown in the drawing, the adhesive layer 40 has a plurality of blank regions 43 corresponding to the bulged region 22. This can be done by using a screen printing method or the like during applying the moisture cure gel.

The performance textile of the present invention thus formed provides desired gas permeability and can cushion impact. Tests have been made based on the embodiments as follow. They serve merely for illustrative purpose, and are not the limitations of the present invention.

The gas permeable fabric 20 is formed according to the structure shown in FIG. 2 made by the warp knitting machine. The yarn of the gas permeable fabric 20 is formed by blending nylon 6 fibers with PU fibers which are in 70 denier and 40 denier respectively. The top layer 12 and bottom layer 13 are formed by circular knitting machines through the blended yarn of nylon 6 fibers and PU fibers which are in 50 denier and 40 denier respectively. The support sections 141 are monofilament PET fibers, and joined with the top layer 12 and bottom layer 13 by tuck knitting. The adhesive layer 40 is a moisture cure gel of PU. The denier previously discussed means the mass in grams per 9000 meters.

Test of gas permeability and impact resistance adopts textile gas permeability test method ASTM D737 made by ASTM (American Society for Testing and Materials) and by using an impact testing machine respectively. Neoprene is used as a control group to compare with the embodiment of the present invention. Results of the test are shown in Table 1 below, where ASTM D737 measures volume of the gas passed through in unit of cfm (cubic feet per minute). In the impact resistance test, impact energy is six Joule, the loading kN (Kilonewtons) on the other side opposite to impact surface of the gas permeable fabric 20 is determined in the impact test.

**Table 1**

| | ASTM D737 | Impact resistance test |
|---|---|---|
| Embodiment | 34.90cfm | 10.3 kN |
| control group | 0 cfin | 17.4 kN |

As shown in the table, the gas can pass the performance textile of the embodiment at a value of 34.90 cfm in the ASTM D737 test while the control group is zero. On impact resistance test with six Joule, the loading of the embodiment of the performance textile worn by a user is 10.3kN, while Neoprene is 17.4 kN. The test results show that the embodiment of the present invention has improvements both on gas permeability and impact resistance over Neoprene.

As a conclusion, the performance textile having gas permeable and protective functions according to the present invention employs a design of bulged regions to form the chamber which can retract and expand during movement of human body to generate volume change and the pressure difference so that the gas can be channeled to user's muscles and skin to rapidly expel heated gas generated thereof. Even with the support layer embedded in the flexible fabric, the pressure difference still can force the gas to pass through the flexible fabric to create a circulation between the gas from exterior and the vapors from the sweat. Meanwhile, the three-dimensional structure of the bulged regions and support sections can reduce external impact on human body and avert injury, thus provide both greater gas permeability and enhanced protection.

The bottom and top layer of the flexible fabric can be knitted respectively in weft and warp directions. Incorporating with the support sections, the performance textile provides an excellent ability to stretch in three dimensions, thus enables users to move freely without constraint. The gas permeable fabric can be made by warp knitting to improve abrasion resistance. All this provides a greater improvement over the conventional techniques.

While the preferred embodiments of the present invention have been set forth for the purpose of disclosure, modifications of the disclosed embodiments of the present invention as well as other embodiments thereof may occur to those skilled in the art. Accordingly, the appended claims are intended to cover all embodiments which do not depart from the spirit and scope of the present invention.

## Claims

1. A performance textile having gas permeable and protective functions, comprising:
a flexible fabric (10) which includes a joining surface (11), said flexible fabric (10) in a stretched condition when receiving a force in parallel with the joining surface (11), said flexible fabric (10) being in n un stretched condition when the force is absent; and
a gas permeable fabric (20) which is arranged on the flexible fabric (10) and includes a plurality of contact regions (21) connecting to the joining surface (11) and a plurality of bulged regions (22) adjacent to the contact regions (21);
the bulged regions (22) forming a chamber (30) with the joining surface (11) to contain gas, a relative displacement being generated between the contact regions (21) when the flexible fabric (10) changes from the un-stretched condition to the stretched condition;
**characterized in that** the bulged regions (22) are configured to move towards the joining surface (11) to conform to the relative displacement to form a volume change of the chamber (30) such that a pressure difference is created to force the gas to pass through the flexible fabric (10).

2. The performance textile of claim 1, wherein the flexible fabric (10) includes a bottom layer (13), a top layer (12) connecting to the gas permeable fabric (20) and a support layer (14) interposed between the bottom layer (13) and the top layer (12).

3. The performance textile of claim 2, wherein the bottom layer (13) and the top layer (12) are Spandex fibers, nylon 6 fibers, nylon 6-6 fibers, polyethylene terephthalate fibers, polyurethane fibers, polyethylene fibers or polypropylene fibers.

4. The performance textile of claim 2, wherein the support layer (14) includes a plurality of supporting fibers (141) with two opposite ends of the supporting fibers (141) connecting to the bottom layer (13) and the top layer (12) respectively.

5. The performance textile of claim 4, wherein an angle is formed between the supporting fibers (141) in a range between 10° to 90°.

6. The performance textile of claim 4, wherein the supporting fibers (141) are monofilament fibers selected from the group consisting of polyester fibers, polypropylene fibers, polyamide fibers, polyethylene fibers, polyacrylonitrile fibers and polyethylene terephthalate fibers.

7. The performance textile of any of the preceding claims, wherein an adhesive layer (40) is attached onto the joining surface (11) which includes a plurality of bonding regions (41) joining the joining surface (11) to the contact regions (21).

8. The performance textile of claim 7, wherein the adhesive layer includes a plurality of blank regions (43) corresponding to the bulged regions (22).

9. The performance textile of claim 7, wherein the adhesive layer (40) is made selectively from polyurethane or polymethylmethacrylate.

10. The performance textile of any of the preceding claims, wherein the gas permeable fabric (20) is made from Spandex fibers, nylon 6 fibers, nylon 6-6 fibers, polyethylene terephthalate fibers, polyurethane fibers, polyethylene fibers, polypropylene fibers or polypropylene fibers.

11. The performance textile of any of the preceding claims, wherein each of the bulged regions (22) includes a peripheral portion (221, 221 a) in contact with the contact regions (21) and an upper portion (222, 222a) extended from the peripheral portion (221, 221 a).

12. the performance textile of any of the preceding claims, wherein the upper portion (222a) is formed at a diameter greater than the peripheral portion (221a).

13. The performance textile of any of the preceding claims, wherein the upper portion (222) is formed at a diameter smaller than the peripheral portion (221).

14. The performance textile of any of the preceding claims, wherein a pliable layer (50) is attached on a surface of the flexible fabric (10) opposite to the gas permeable fabric (20).

## Patentansprüche

1. Funktionstextil mit gasdurchlässiger und schützender Funktion, umfassend:
ein flexible Gewebe (10), das eine Verbindungsoberfläche (11) aufweist, wobei das Gewebe (10) sich in einem gedehnten Zustand befindet, wenn dieses eine Kraft parallel zu der Verbindungsoberfläche (11) erfährt, und wobei das Gewebe (10) sich in einem gedehnten Zustand befindet, wenn die Kraft nicht vorherrscht; und
ein gasdurchlässiges Gewebe (20), das auf dem flexible Gewebe (10) angeordnet ist und eine Mehrzahl von Berührungsabschnitten (21), die mit der Verbindungsoberfläche (11) verbinden, sowie eine Mehrzahl von vorgewölbten Abschnitten (22) aufweist, die an die Berührungsabschnitte (21) angrenzen;
wobei die vorgewölbten Abschnitte (22) eine Kammer (30) gemeinsam mit der Verbindungsoberfläche (11) ausbilden, um Gas zu enthalten, wobei eine Relativverschiebung zwischen den Berührungsabschnitten (21) hervorgerufen wird, wenn das flexible Gewebe (10) von dem ungedehnten Zustand in den gedehnten Zustand übergeht;
**dadurch gekennzeichnet, dass** die vorgewölbten Abschnitte (22) ausgelegt sind, um sich hin zu der Verbindungsoberfläche (11) zu bewegen, um sich der Relativverschiebung anzupassen, um eine Volumenänderung in der Kammer (30) auszubilden, sodass eine Druckdifferenz erzeugt wird, um das Gas dazu zu zwingen, durch das flexible Gewebe (10) hindurch zu treten.

2. Funktionstextil nach Anspruch 1, wobei das flexible Gewebe (10) eine untere Lage (13), eine obere Lage (12), welche mit dem gasdurchlässigen Gewebe (20) verbindet, sowie eine Stützlage (14) aufweist, die sich zwischen der unteren Lage (13) und der oberen Lage (12) befindet.

3. Funktionstextil nach Anspruch 2, wobei die untere Lage (13) und die obere Lage (12) Spandex-Fasern, Nylon-6-Fasern, Nylon-6-6-Fasern, Polyethylenterephtalat-Fasern, Polyurethan-Fasern, Polyethylen-Fasern oder Polypropylen-Fasern sind.

4. Funktionstextil nach Anspruch 2, wobei die Stützlage (14) eine Mehrzahl von Stützfasern (141) aufweist, wobei die beiden einander gegenüberliegenden Enden der Stützfasern (141) mit der unteren Lage (13) bzw. mit der oberen Lage (12) verbinden.

5. Funktionstextil nach Anspruch 4, wobei ein Winkel in einem Bereich zwischen 10° bis 90°zwischen den Stützfasern (141) ausgebildet ist.

6. Funktionstextil nach Anspruch 4, wobei die Stützfasern au seiner Gruppe ausgewählt sind, die besteht aus Polyester-Fasern, Polypropylen-Fasern, Polyamid-Fasern, Polyethylen-Fasern, Polyacrylonitril-Fasern und Polyethylenterephatalat-Fasern besteht.

7. Funktionstextil nach einem der vorhergehenden Ansprüche, wobei eine Klebe- bzw. Haftschicht (40) auf die Verbindungsoberfläche (11) aufgebracht ist, welche eine Mehrzahl von Klebe- bzw. Haftbereichen (41) umfasst, welche die Verbindungsoberfläche (11) mit den Berührungsabschnitten (21) verbindet.

8. Funktionstextil nach Anspruch 7, wobei die Klebe- bzw. Haftschicht eine Mehrzahl von Formabschnitten (43) aufweist, die den vorgewölbten Abschnitten (22) entsprechen.

9. Funktionstextil nach Anspruch 7, wobei die Klebe- bzw. Haftschicht (40) gezielt aus Polyurethan oder Polymethylmethacrylat hergestellt ist.

10. Funktionstextil nach einem der vorhergehenden Ansprüche, wobei das gasdurchlässige Gewebe (20) aus Spandex-Fasern, Nylon-6-Fasern, Nylon-6-6-Fasern, Polyethylenterephtalat-Fasern, Polyurethan-Fasern, Polyethylen-Fasern oder Polypropylen-Fasern besteht.

11. Funktionstextil nach einem der vorhergehenden Ansprüche, wobei jeder der vorgewölbten Abschnitte (22) einen Randabschnitt (221, 221a) aufweist, der mit den Kontaktabschnitten (21) und einem oberen Abschnitt (222, 222a) in Kontakt steht, der sich ausgehend von dem Randabschnitt (221, 221a) erstreckt.

12. Funktionstextil nach einem der vorhergehenden Ansprüche, wobei der obere Abschnitt (222a) mit einem größeren Durchmesser ausgebildet ist als der Randabschnitt (221a).

13. Funktionstextil nach einem der vorhergehenden Ansprüche, wobei der obere Abschnitt (222a) mit einem kleineren Durchmesser ausgebildet ist als der Randabschnitt (221a).

14. Funktionstextil nach einem der vorhergehenden Ansprüche, wobei biegbare Lage (50) auf einer Oberfläche des flexible Gewebes (10) gegenüberliegend zu dem gasdurchlässigen Gewebe (20) angebracht ist.

## Revendications

1. Un textile haute performance dotée d'une fonction de protection et perméable aux gaz, comprenant :
un tissu flexible (10) comportant une surface de liaison (11), ledit tissu flexible (10) étant en condition tendue lorsque exposé à une force parallèle à la surface de liaison (11), ledit tissu flexible étant en condition détendue en l'absence d'effort; et
un tissu perméable aux gaz (20) qui est disposé sur le tissu flexible (10) et qui comporte une pluralité de régions de contact (21) reliées à la surface de liaison (11) et une pluralité de régions bombées (22) adjacentes aux régions de contact (21);
les régions bombées (22) formant une chambre (30) avec la surface de liaison pour contenir du gaz, un déplacement relatif étant généré entre les régions de contact (21) lorsque le tissu flexible passe de la condition détendue à la condition tendue;
**caractérisé en ce que** les régions bombées (22) sont configurées pour un déplacement vers la surface de liaison (11) suivant le déplacement relatif pour former un changement de volume de la chambre (30) de telle manière que la différence de pression est crée pour forcer le gaz à passer au travers le tissu flexible (10).

2. Le textile haute performance de la revendication 1, dans lequel le tissu flexible (10) comporte une couche inférieure (13), une couche supérieure (12) relié au tissu perméable aux gaz et une couche support (14) interposée entre la couche inférieure (13) et la couche supérieure (12).

3. Le textile haute performance de la revendication 2, dans lequel la couche inférieure (13) et la couche supérieure (12) sont des fibres Spandex, des fibres Nylon 6, de fibres nylon 6-6, de fibres téréphtalique polyéthylènes, de fibres polyuréthanes, de fibres polyéthylènes ou de fibres polypropylènes.

4. Le textile haute performance de la revendication 2, dans lequel la couche support (14) comporte une pluralité de fibres de support (141), les deux extrémités opposées des fibres support (141) étant respectivement reliées à la couche inférieure (13) et à la couche supérieure (12).

5. Le textile haute performance de la revendication 4, dans lequel un angle dans une gamme de 10° à 90° est formé entre les fibres de support (141).

6. Le textile haute performance de la revendication 4, dans lequel les fibres de support (141) sont des fibres mono filament sélectionnés à partir du groupe comportant les fibres polyester, les fibres polypropylène, les fibres polyamide, les fibres polyéthylène, les fibres poly acrylonitrile et les fibres téréphtalate polyéthylène.

7. Le textile haute performance de l'une quelconque des revendications précédentes, dans lequel une couche adhésive (40) est fixée sur la surface de liaison (11) qui comporte une pluralité de régions de soudure (41) reliant la surface de liaison (11) aux régions de contact (21).

8. Le texte haute performance de la revendication 7, dans lequel la couche adhésive comporte une pluralité de régions blanches (43) correspondant aux régions bombées (22).

9. Le texte haute performance de la revendication 7, dans lequel la couche adhésive (40) est fait de manière choisie à partir de polyuréthane ou de polyméthylméthacrylate.

10. Le texte haute performance de l'une quelconque des revendications précédentes, dans lequel le tissu perméable aux gaz (20) est réalisé à partir de fibres Spandex, des fibres Nylon 6, de fibres nylon 6-6, de fibres téréphtalique polyéthylènes, de fibres polyuréthanes, de fibres polyéthylènes ou de fibres polypropylènes.

11. Le textile haute performance de l'une quelconque des revendications précédentes, dans lequel chacune des régions bombées (22) comporte une partie périphérique (221, 221a) en contact avec les régions de contact (21) et une partie supérieure (222, 222a) s'étendant à partir de la partie périphérique (221, 221 a).

12. Le textile haute performance de l'une quelconque des revendications précédentes, dans lequel la partie supérieure (222a) est formée avec un diamètre supérieure à la partie périphérique (221a).

13. Le textile haute performance de l'une quelconque des revendications précédentes, dans lequel la partie supérieure (222) est formée avec un diamètre inférieure à la partie périphérique (221).

14. Le textile haute performance de l'une quelconque des revendications précédentes, dans lequel une couche pliable (50) est fixée sur une surface du tussi flexible (10) opposée au tissu perméable aux gaz.
